# EUROPÄISCHE PATENTSCHRIFT

(11) **EP 1 250 241 B1**
(45) Veröffentlichungstag und Bekanntmachung des Hinweises auf die Patenterteilung: **20.12.2006**
(21) Anmeldenummer: 01966935.7
(22) Anmeldetag: 26.09.2001
(51) Int. Cl.: B60J 10/02, B60J 10/00, B60R 13/07

(54) **VERBINDUNG ZWISCHEN DER UNTERKANTE EINER WINDSCHUTZSCHEIBE EINES KRAFTFAHRZEUGES UND EINEM WASSERABWEISER**
CONNECTION BETWEEN THE LOWER EDGE OF A MOTOR VEHICLE WINDSHIELD AND A WATER DEFLECTOR
ASSEMBLAGE ENTRE L'ARETE INFERIEURE D'UN PARE-BRISE D'AUTOMOBILE ET UN DEFLECTEUR D'EAU

(30) Priorität: 30.11.2000 CH 232700
(43) Veröffentlichungstag der Anmeldung: 23.10.2002
(73) Patentinhaber: Weidmann Plastics Technology AG, 8640 Rapperswil (CH)
(72) Erfinder: GAISER, Werner, 78333 Stockach (DE); SPROTTE, Matthias, CH-8645 Jona (CH); KOSTER, Casper, CH-8640 Rapperswil (CH)
(74) Vertreter: Groner, Manfred
(86) Internationale Anmeldenummer: PCT/CH2001/000580
(87) Internationale Veröffentlichungsnummer: WO 2002/043979

(56) Entgegenhaltungen:
- DE-U- 8 710 531
- DE-U- 20 008 555
- FR-A- 2 668 110
- FR-A- 2 754 503
- US-A- 4 858 988
- US-A- 5 352 010

## Beschreibung

Die Erfindung betrifft eine Verbindung zwischen der Unterkante einer Windschutzscheibe eines Kraftfahrzeuges und einem Wasserabweiser, mit einem Scheibenrahmen, der sich entlang der Unterkante der Windschutzscheibe erstreckt und an deren Unterseite befestigt ist und der einen sich im wesentlichen parallel zur genannten Unterkante erstreckenden Kanal bildet, in den ein Haltesteg des Wasserabweisers eingreift.

Solche Verbindungen sind bei Personenkraftwagen seit längerem üblich und somit allgemein bekannt. Sie fixiert den Wasserabweiser an der Unterkante der Windschutzscheibe und sorgt für einen wasserdichten Übergang von der Windschutzscheibe zum Wasserabweiser. Auf der Aussenseite der Windschutzscheibe abfliessendes Wasser gelangt über den Wasserabweiser zu einem Wasserkasten. Bei der Montage eines Personenkraftwagens wird diese Verbindung von Hand gefügt. Hierbei wird der Haltesteg von Hand in einen Kanal des Scheibenrahmens eingedrückt. Dieser Kanal erstreckt sich im wesentlichen über die ganze Länge der Unterkante der Windschutzscheibe. Der Kanal ist vergleichsweise schmal und muss jedesmal umständlich gesucht werden. Zudem ist der Kraftaufwand zum Eindrücken des Haltesteges in den Kanal vergleichsweise gross und somit die Montage mühsam. Hierbei ist zu berücksichtigen, dass solche Verbindungen in Serie gefügt werden müssen. Eine weitere Schwierigkeit besteht darin, dass sehr hohe Toleranzen auftreten. Die Verbindung muss so gestaltet sein, dass sie weitgehend toleranzunabhängig ist.

Durch die DE-U-200 08 555 ist eine gattungsgemässe Verbindung der genannten Art bekannt geworden. Bei dieser weist der Wasserabweiser einen etwa rechtwinklig nach unten abstehenden Haltesteg auf, der in einen Kanal des Scheibenrahmens eingreift und in diesem verrastet.

Der Erfindung liegt die Aufgabe zugrunde, eine Verbindung der genannten Art so zu gestalten, dass der Wasserabweiser einfacher montiert werden kann. Die Verbindung soll trotzdem dicht und toleranzunabhängig und zudem kostengünstig herstellbar sein.

Die Aufgabe ist dadurch gelöst, dass in den Kanal ein Keil eingesetzt ist, der den Haltesteg im Kanal festlegt. Bei der erfindungsgemässen Verbindung kann der Kanal wesentlich breiter ausgebildet sein als bisher. Beim Einlegen des Haltesteges in den Kanal muss keine Kraft für einen Rasteingriff ausgeübt werden. Der Wasserkasten kann somit ohne Kraftaufwand am Scheibenrahmen angeordnet werden. Anschliessend wird der Keil eingelegt und damit der Haltesteg im Kanal festgelegt. Das Einlegen des Keiles ist dann besonders einfach, wenn dieser streifenförmig ausgebildet ist. Der Keil kann an einem Ende in den Kanal eingesetzt und dann in Längsrichtung fortlaufend in den Kanal eingedrückt werden. Der Kraftaufwand zum Einlegen des Keiles ist vergleichsweise klein. Dies auch dann, wenn der Keil verrastet wird. Der Keil wird vorzugsweise mit dem Haltesteg verrastet. Denkbar ist jedoch auch ein Verrasten des Keiles mit dem Haltesteg und gleichzeitig mit dem Scheibenrahmen.

Ein weiterer Vorteil der erfindungsgemässen Verbindung wird darin gesehen, dass der Keil auf seiner Sichtseite mit der Aussenseite der Windschutzscheibe bündig ausgebildet werden kann. Damit können die Scheibenwischer problemlos auf eine Ruheposition auf den Wasserabweiser zurückgezogen werden. Schliesslich ist auch eine Demontage sehr einfach, da lediglich der Keil aus dem Kanal herausgezogen werden muss. Es hat sich gezeigt, dass die erfindungsgemässe Verbindung sehr wasserdicht ist und einen ausgezeichneten Halt ergibt.

Ist der Keil aus einem elastischen Material, beispielsweise aus einem Schaumstoff hergestellt, so können besonders grosse Toleranzen aufgenommen werden.

Nach einer Weiterbildung der Erfindung ist der Keil im Querschnitt gesehen in einem Rastbereich aus einem härteren Kunststoff hergestellt, als in einem ***darüberliegenden*** Bereich. Dadurch kann einerseits eine bessere Rastwirkung und andererseits ein höherer Toleranzausgleich sowie eine höhere Dämpfung im weicheren Bereich erzielt werden.

Weitere vorteilhafte Merkmale ergeben sich aus den abhängigen Patentansprüchen, der nachfolgenden Beschreibung sowie der Zeichnung. Es zeigen:
- Fig. 1: ein Schnitt durch eine erfindungsgemässe Verbindung,
- Fig. 2: ein Schnitt durch eine Variante der erfindungsgemässen Verbindung,
- Fig. 3: ein Schnitt durch eine weitere Variante der erfindungsgemässen Verbindung,
- Fig. 4: ein Schnitt durch eine weitere Variante der erfindungsgemässen Verbindung,
- Fig. 5: ein Schnitt durch eine weitere Variante der erfindungsgemässen Verbindung und
- Fig. 6: eine Ansicht der erfindungsgemässen Verbindung entsprechend der Variante gemäss Fig. 5.

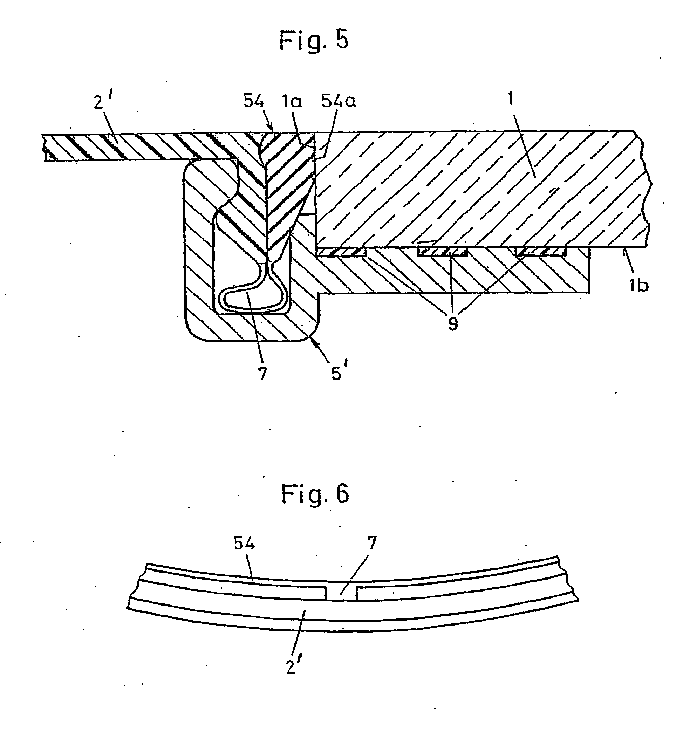

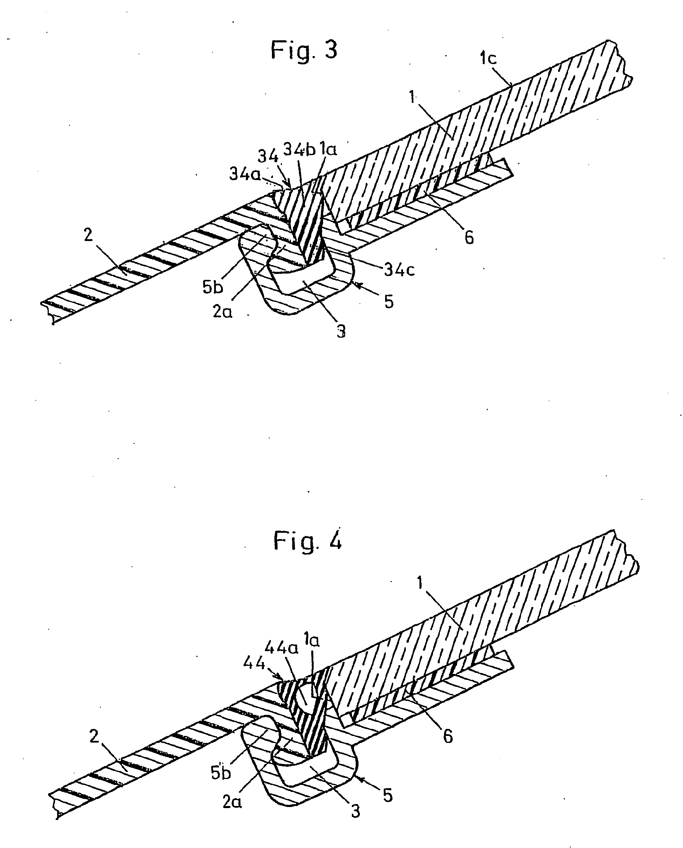

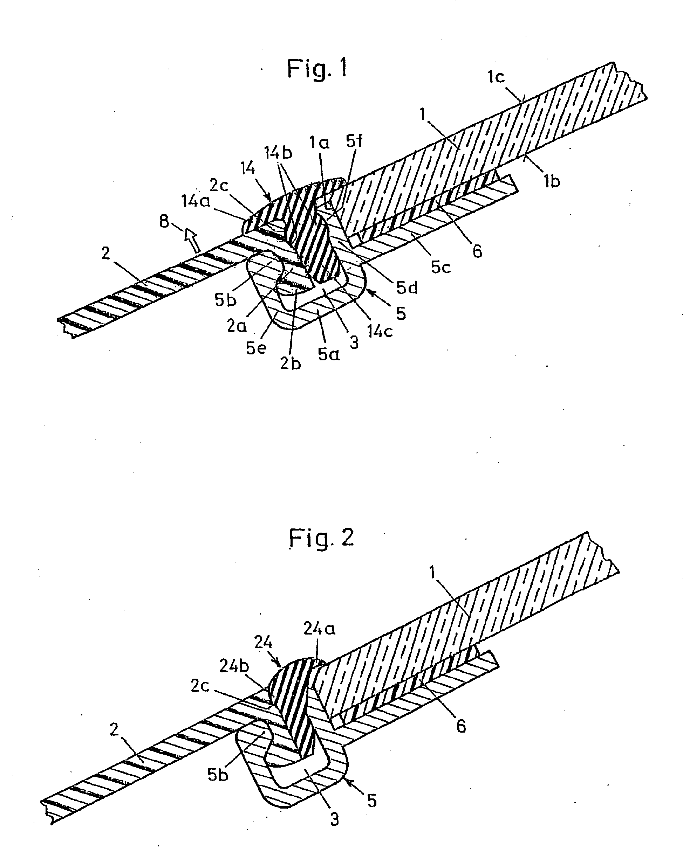

Die in Fig. 1 gezeigte Windschutzscheibe 1 ist eine an sich übliche in einem Kraftfahrzeug und insbesondere einem Personenwagen montierte Scheibe mit einer Aussenseite 1c, einer Innenseite 1b sowie einer Unterkante 1a. Auf der Innenseite 1b ist ein Scheibenrahmen 5 an einem streifenförmigen Teil 5c mittels eines Klebbandes 6 oder einem geeigneten Kleber befestigt. Am Streifen 5c ist eine U-förmige Abbiegung 5a angeformt, die einen Kanal 3 bildet, der sich entlang der Unterkante 1a erstreckt. Dieser Kanal 3 ist wie ersichtlich oben offen und seitlich von parallelen Wandungen 5d und 5e begrenzt. An der Wandung 5e ist ein nach innen ragender Rastwulst 5b angeformt. Dieser Rastwulst 5b verengt wie ersichtlich die Öffnung des Kanals 3.

Ein Wasserabweiser 2, der eine Wasserkastenabdeckung bilden kann und von dem hier lediglich der obere Rand gezeigt ist, weist einen Haltesteg 2a auf, der wie ersichtlich in den Kanal 3 auf seiner ganzen Länge eingreift. Dieser Haltesteg 2a weist ebenfalls einen angeformten Rastwulst 2b auf, der den Rastwulst 5b untergreift. Der Wasserabweiser 2 ist vorzugsweise aus einem geeigneten Kunststoff hergestellt.

Ein Keil 14 ist im Querschnitt pilzförmig ausgebildet und erstreckt sich über die gesamte Länge des Kanals 3. Dieser Keil 14 besitzt einen Eingriffsteil 14c, an dem zwei gegenüberliegende Rastrippen 14b angeordnet sind, von denen die eine in eine Rastrille 2c des Wasserabweisers 2 und die andere in eine Rastrille 5f des Scheibenrahmens 5 eingerastet ist. Der Keil 14 ist vorzugsweise aus einem elastischen Material hergestellt und so dimensioniert, dass er unter Spannung am Haltesteg 2a und an der Wandung 5d anliegt. Ein äusserer streifenförmiger Ansatz 14a liegt ebenfalls unter Spannung an der Aussenseite des Wasserabweisers 2 sowie an der Aussenseite 1c der Windschutzscheibe 1 an. Der Keil 14 hält den Haltesteg 2a fest in der gezeigten verrasteten Position und verhindert, dass der Wasserabweiser 2 in der Richtung des Pfeiles 8 aus dem Kanal 3 herausgehoben werden kann. Die Verbindung zwischen dem Wasserabweiser 2 und dem Scheibenrahmen 5 ist so ausgebildet, dass der Wasserabweiser 2 in Richtung des Pfeiles 8 nicht abnehmbar ist. Infolge der genannten Spannung und einer flächigen Anlage des Keiles 14 am Haltesteg 2a und an der Wandung 5d ist die Verbindung zudem wasserdicht, so dass auf der Aussenseite 1c nach unten rinnendes Wasser nicht in den Kanal 3 gelangen kann.

Beim Montieren des Wasserabweisers 2 ist die Windschutzscheibe 1 bereits in der Karosserie befestigt und der Scheibenrahmen 5 ist am unteren Rand der Windschutzscheibe 1 mittels des Klebbandes 6 befestigt. Der Keil 14 befindet sich noch nicht im kanal 3. Als erstes wird der Wasserabweiser 2 auf den Scheibenrahmen 5 aufgesetzt, wobei der Haltesteg 2a wie in Fig. 1 ersichtlich an der Wandung 5e anliegt. Nun wird der Keil 14 an seinem einen Ende in den Kanal 3 eingerastet und anschliessend wird er von dieser Stelle aus in Längsrichtung fortlaufend in den Kanal 3 eingedrückt. Hierbei rasten die gegenüberliegenden Rippen 14b in die Rillen 2c und 5f ein. Die Montage des Wasserabweisers 2 ist damit beendet. Für die Demontage wird der Keil 14 an seinem einen Ende gefasst und aus dem Kanal 3 herausgezogen. Anschliessend ist eine Montage wie oben erläutert möglich. Der Kanal 3 ist wie ersichtlich vergleichsweise breit, so dass der Wasserabweiser 2 ohne Kraftaufwand und auch bei schlechter Zugänglichkeit und Sicht sehr einfach und schnell am Scheibenrahmen 5 angeordnet werden kann.

Die Ausführung gemäss Fig. 2 weist einen Keil 24 auf, der im Querschnitt etwa sichelförmig ausgebildet ist und der eine Rastrippe 24b aufweist, die in eine Rastrille 2c' des Wasserabweiser 2 eingerastet ist. Ein Rand 24a liegt elastisch gespannt an der Aussenseite 1c der Windschutzscheibe an. Die Montage erfolgt grundsätzlich gleich wie bei der Verbindung gemäss Fig. 1.

Die Verbindung gemäss Fig. 3 weist einen Keil 34 auf, bei welchem eine Sichtseite 34a mit der Aussenseite 1c der Windschutzscheibe 1 bündig ist. Der Keil 34 liegt zudem an der Unterkante 1a der Windschutzscheibe 1 federelastisch dichtend an. Für einen höheren Toleranzausgleich bei gleichzeitig guter Verrastmöglichkeit weist der Keil 34 zwei unterschiedlich harte Bereiche 34b und 34c auf. Der härtere Bereich 34c hält den Haltesteg 2a fest in gezeigter Raststellung. Auch bei dieser Verbindung erfolgt die Montage und Demontage wie oben erläutert. Die Bündigkeit des Keiles 34 hat den wesentlichen Vorteil, dass die Scheibenwischer ohne weiteres auf den Wasserabweiser 2 in eine Ruheposition zurückgezogen werden können.

Auch die Verbindung gemäss Fig. 4 zeichnet sich durch die genannte Bündigkeit aus. Hier ist jedoch ein Keil 44 vorgesehen, der einen Innenkanal 44a aufweist, der sich vorzugsweise über die gesamte Länge des Keiles 44 erstreckt. Dieser Innenkanal 44a hat den Vorteil, dass er die Elastizität des Keiles 44 erhöht und dadurch besonders grosse Toleranzabweichungen aufnehmen kann. Solche Toleranzabweichungen ergeben sich insbesondere durch den Verlauf und die Lage der Unterkante la. Der Abstand zwischen dieser Unterkante 1a und dem Haltesteg 2a kann somit unterschiedlich sein.

Bei der Ausführung gemäss Fig. 5 ist ein Scheibenrahmen 5' mit streifenförmig aufgebrachtem Kleber 9 an der Innenseite 1b der Windschutzscheibe 1 befestigt. Ein Keil 54 ist mittels eines Filmscharniers 7 an einem Wasserabweiser 2' angeformt. Wie die Fig. 6 zeigt, erstreckt sich dieses Filmscharnier 7 lediglich über einen vergleichsweise schmalen Teilbereich des Keils 54. Grundsätzlich könnte sich dieses Filmscharnier 7 jedoch auch über die gesamte Länge des Keils 54 erstrecken. Diese Ausführung hat den Vorteil, dass der Keil 54 kein separates Teil ist, sondern mit dem Wasserabweiser 2' einstückig ist. Das Filmscharnier 7 ist so ausgebildet, dass wie oben erläutert, in einem ersten Schritt der Wasserabweiser 2' in den Kanal 5 ohne Kraftaufwand eingesetzt werden kann. Erst in einem zweiten Schritt wird dann der Keil 54 in den Kanal 5 eingesetzt und rastet am Wasserabweiser 2' ein. Unter Spannung liegt der Keil 54 an einem flächigen Bereich 54a an der Unterkante 1a der Windschutzscheibe 1 an. Bei einer Demontage bleibt der Keil 54 über das Filmscharnier 7 mit dem Wasserabweiser 2' verbunden und kann somit nicht verloren gehen. Auch dieser Keil 54 kann unterschiedlich harte Bereiche aufweisen, wie dies bei den Keilen 34 und 44 anhand der Figuren 3 und 4 erläutert wurde.

## Patentansprüche

1. Verbindung zwischen der Unterkante (1a) einer Windschutzscheibe (1) eines Kraftfahrzeuges und einem Wasserabweiser (2, 2'), mit einem Scheibenrahmen (5, 5'), der sich entlang der Unterkante (1a) der Windschutzscheibe (1) erstreckt und an deren Unterseite (1b) befestigt ist und der einen sich im wesentlichen parallel zur Unterkante (1a) erstreckenden Kanal (5) bildet, in den ein Haltesteg (2a) des Wasserabweisers (2, 2') eingreift, **dadurch gekennzeichnet, dass** in den Kanal (5) ein Keil (14, 24, 34, 44, 54) eingesetzt ist, der den Haltesteg (2a) im Kanal (5) festlegt.

2. Verbindung nach Anspruch 1, **dadurch gekennzeichnet, dass** der Keil (14, 24, 34, 44, 54) streifenförmig ausgebildet ist.

3. Verbindung nach Anspruch 1 oder 2, **dadurch gekennzeichnet, dass** der Keil (14, 24, 34, 44, 54) lösbar verrastet ist.

4. Verbindung nach Anspruch 3, **dadurch gekennzeichnet, dass** der Keil (14, 24, 34, 44, 54) mit dem Haltesteg (2a) des Wasserabweisers (2, 2') verrastet ist.

5. Verbindung nach einem der Ansprüche 1 bis 4, **dadurch gekennzeichnet, dass** der Keil (14, 24, 34, 44, 54) ein flexibler Streifen aus Kunststoff ist.

6. Verbindung nach einem der Ansprüche 1 bis 5, **dadurch gekennzeichnet, dass** sich der Keil (14, 24, 34, 44, 54) im wesentlichen über die gesamte Länge der Unterkante (1a) der Windschutzscheibe (1) erstreckt.

7. Verbindung nach einem der Ansprüche 1 bis 6, **dadurch gekennzeichnet, dass** der Keil (14, 24, 34, 44, 54) mit dem Haltesteg (2a) verbunden ist.

8. Verbindung nach Anspruch 7, **dadurch gekennzeichnet, dass** der Keil (14, 24, 34, 44, 54) mittels eines Filmscharniers (7) mit dem Haltesteg (2a) verbunden ist.

9. Verbindung nach einem der Ansprüche 1 bis 8, **dadurch gekennzeichnet, dass** eine Sichtseite (34a, 44a) des Keils (14, 24, 34, 44, 54) mit der Aussenseite (1c) der Windschutzscheibe (1) bündig ist.

10. Verbindung nach Anspruch 9, **dadurch gekennzeichnet, dass** die Sichtseite (34a, 44a) zudem mit der Aussenseite des Wasserabweisers (2, 2') bündig ist.

11. Verbindung nach einem der Ansprüche 1 bis 8, **dadurch gekennzeichnet, dass** der Keil (14, 24, 34, 44, 54) im Querschnitt etwa pilzförmig ausgebildet ist.

12. Verbindung nach einem der Ansprüche 1 bis 8, **dadurch gekennzeichnet, dass** der Keil (24) im Querschnitt etwa sichelförmig ausgebildet ist und mit einem oberen Rand (24a) auf der Aussenseite (1c) der Windschutzscheibe (1) unter Spannung dicht aufliegt.

13. Verbindung nach einem der Ansprüche 1 bis 12, **dadurch gekennzeichnet, dass** der Keil (44) einen durchgehenden Innenkanal (44a) aufweist.

14. Verbindung nach einem der Ansprüche 1 bis 13, **dadurch gekennzeichnet, dass** der Scheibenrahmen (5) an der Unterseite der Windschutzscheibe (1) befestigt ist.

15. Verbindung nach Anspruch 14, **dadurch gekennzeichnet, dass** der Scheibenrahmen (5) an der Windschutzscheibe (1) angeklebt ist.

16. Verbindung nach 14 oder 15, **dadurch gekennzeichnet, dass** der Scheibenrahmen (5) mittels eines Klebbandes (6) an der Windschutzscheibe angeklebt ist.

17. Verbindung nach einem der Ansprüche 1 bis 16, **dadurch gekennzeichnet, dass** der Keil (14, 24, 34, 44, 54) lösbar in den Kanal (5) eingerastet ist.

18. Verbindung nach einem der Ansprüche 1 bis 17, **dadurch gekennzeichnet, dass** der Keil (34) im Querschnitt gesehen unterschiedlich harte Bereiche (34b, 34c) aufweist.

19. Wasserabweiser für eine Verbindung gemäss Anspruch 1, wobei der Haltesteg (2a) an einem oberen Rand des Wasserabweisers angeordnet ist und etwa rechtwinklig nach unten absteht, **dadurch gekennzeichnet, dass** der Keil (54) mit dem Haltesteg (2a) verbunden ist.

20. Wasserabweiser nach Anspruch 19, **dadurch gekennzeichnet, dass** der Keil (54) mittels eines Filmscharniers (7) mit dem Haltesteg (2a) verbunden ist.

21. Wasserabweiser nach Anspruch 19 oder 20, **dadurch gekennzeichnet, dass** der Keil (54) streifenförmig ausgebildet ist.

22. Wasserabweiser nach einem der Ansprüche 19 bis 21, **dadurch gekennzeichnet, dass** der Keil (54) ein flexibler Streifen aus Kunststoff ist.

23. Wasserabweiser nach einem der Ansprüche 19 bis 22, **dadurch gekennzeichnet, dass** der Keil (54) im Querschnitt gesehen unterschiedlich harte Bereiche aufweist.

24. Wasserabweiser nach Anspruch 23, **dadurch gekennzeichnet, dass** ein oberer Bereich des Keils (54) weicher ist als ein unterer Bereich.

25. Wasserabweiser nach einem der Ansprüche 20 bis 24, **dadurch gekennzeichnet, dass** der Keil (54) mit dem Haltesteg verrastbar ist.

26. Wasserabweiser nach einem der Ansprüche 19 bis 25, **dadurch gekennzeichnet, dass** der Keil (44) einen durchgehenden Innenkanal (44a) aufweist.

27. Scheibenrahmen für eine Verbindung gemäss Anspruch 1, mit einer im Querschnitt U-förmigen Abbiegung (5a), **dadurch gekennzeichnet, dass** er Vertiefungen aufweist, in denen Kleber (9) zur Befestigung des Scheibenrahmens an der Innenseite der Windschutzscheibe (1) angeordnet ist.

## Claims

1. A connection between the lower edge (1a) of a motor vehicle glass windshield (1) and a water deflector (2, 2'), comprising a window frame (5, 5') which extends along said lower edge (1a) of said windshield (1) and which is fastened to the bottom side (1b) of said windshield (1), whereby said window frame (5, 5') forms a channel (3) extending essentially parallel to said lower edge (1a) and whereby a retaining connecting member (2a) of said water deflector (2) engages said channel (3), **characterized in that** a wedge (14, 24, 34, 44, 54) is inserted into said channel (3) whereby said wedge (14, 24, 34, 44, 54) secures said retaining connecting member (2a) inside the channel (3).

2. A connection according to claim 1, **characterized in that** said wedge (14, 24, 34, 44, 54) is designed in the form of a strip.

3. A connection according to claim 1 or 2, **characterized in that** said wedge (14, 24, 34, 44, 54) is detachably interlocked.

4. A connection according to claim 3,**characterized in that** said wedge (14, 24, 34, 44, 54) is interlocked with said retaining connecting member (2a) of said water deflector (2, 2').

5. A connection according to one of the claims 1 through 4, **characterized in that** said wedge (14, 24, 34, 44, 54) is a flexible strip made of synthetic material.

6. A connection according to one of the claims 1 through 5, **characterized in that** said wedge (14, 24, 34, 44, 54) extends essentially along the entire length of the lower edge (1a) of said windowshield (1).

7. A connection according to one of the claims 1 through 6, **characterized in that** said wedge (14, 24, 34, 44, 54) is connected to said retaining connecting member (2a).

8. A connection according to claim 7, **characterized in that** said wedge (14, 24, 34, 44, 54) is connected to said retaining connecting member (2a) by means of an integral foil hinge (7).

9. A connection according to one of the claims 1 through 8, **characterized in that** a front side (34a, 44a) of said wedge (14, 24, 34, 44, 54) is flush with the outer side (1c) of said windowshield (1).

10. A connection according to claim 9, **characterized in that** said front side (34a) is also flush with the outer side (1c) of said water deflector (2, 2').

11. A connection according to one of the claims 1 through 8, **characterized in that** said wedge (14, 24, 34, 44, 54) is designed approximately in the shape of a mushroom.

12. A connection according to one of the claims 1 through 8,**characterized in that** said wedge (14, 24, 34, 44, 54) is designed approximately in the shape of a half-moon and whereby it rests tightly with its upper edge (1c) against the outer side of said windshield (1) while being under tension.

13. A connection according to one of the claims 1 through 12, **characterized in that** said wedge (14, 24, 34, 44, 54) is provided with a continuous inner channel (44a).

14. A connection according to one of the claims 1 through 12, **characterized in that** said window frame (5) is fastened to the underside of said windshield (1).

15. A connection according to claim 14, **characterized in that** said window frame (5) is glued to said windshield (1).

16. A connection according to claim 14 or 15, **characterized in that** said window frame (5) is glued to said windshield (1) by means of an adhesive strip (6).

17. A connection according to one of the claims 1 through 16, **characterized in that** said wedge (14, 24, 34, 44, 54) is detachably locked inside said channel (3).

18. A connection according to one of the claims 1 through 17, **characterized in that** said wedge (34) is provided with sections (34b, 34c) of varying hardness, as shown in cross section.

19. A water deflector for a connection according to claim 1, wherein said retaining connecting member (2a) is positioned at an upper edge a retaining connecting member (2a) protruding downwardly at a right angle, **characterized in that** said wedge (54) is connected with said retaining member (2a).

20. A water deflector for a connection according to claim 19, **characterized in that** said wedge (54) is connected to said connecting member (2a) with a foil hinge (7).

21. A window frame for a connection according to claim 19 or 20, **characterized in that** the wedge (54) is designed in the form of a strip.

22. A window frame for a connection according to one of the claims 19 through 21, **characterized in that** wedge (54) is a flexible strip made of synthetic material.

23. A window frame for a connection according to one of the claims 19 through 22, **characterized in that** the wedge (54) is provided with sections of varying hardness, as shown in cross section.

24. A window frame for a connection according to claim 23, **characterized in that** an upper area of the wedge (54) is softer than a lower area.

25. A window frame for a connection according to one of the claims 20 through 24, **characterized in that** the wedge (54) is interlocked with said retaining connecting member.

26. A window frame for a connection according to one of the claims 19 through 25, **characterized in that** the wedge (44) is provided with a continuous inner channel (44a).

27. A window frame for a connection according to claim 1, with a piece (5a) that is U-shaped in cross section, **characterized in that** it is provided with indentations in which adhesive (9) is arranged for fastening the window frame at the inner side of the windshield (1).

## Revendications

1. Connexion entre l'arête inférieure (1a) d'un pare-brise (1) d'un véhicule automobile et un déflecteur d'eau (2, 2'), comprenant un cadre de vitre (5, 5') qui s'étend le long de l'arête inférieure (1a) du pare-brise (1) et qui est fixé à son côté inférieur (1b) et qui forme un canal (5) s'étend essentiellement parallèlement à l'arête inférieure (1a), dans lequel une nervure de retenue (2a) du déflecteur d'eau (2, 2') vient en prise, **caractérisée en ce qu'**une cale (14, 24, 34, 44, 54) est insérée dans le canal (5), laquelle fixe la nervure de retenue (2a) dans le canal (5).

2. Connexion selon la revendication 1, **caractérisée en ce que** la cale (14, 24, 34, 44, 54) est réalisée sous forme de bande.

3. Connexion selon la revendication 1 ou 2, **caractérisée en ce que** la cale (14, 24, 34, 44, 54) est encliquetée de manière desserrable.

4. Connexion selon la revendication 3, **caractérisée en ce que** la cale (14, 24, 34, 44, 54) est encliquetée avec la nervure de retenue (2a) du déflecteur d'eau (2, 2').

5. Connexion selon l'une quelconque des revendications 1 à 4, **caractérisée en ce que** la cale (14, 24, 34, 44, 54) est une bande flexible en matière plastique.

6. Connexion selon l'une quelconque des revendications 1 à 5, **caractérisée en ce que** la cale (14, 24, 34, 44, 54) s'étend essentiellement sur toute la longueur de l'arête inférieure (1a) du pare-brise (1).

7. Connexion selon l'une quelconque des revendications 1 à 6, **caractérisée en ce que** la cale (14, 24, 34, 44, 54) est connectée à la nervure de retenue (2a).

8. Connexion selon la revendication 7, **caractérisée en ce que** la cale (14, 24, 34, 44, 54) est connectée à la nervure de retenue (2a) au moyen d'une charnière vive (7).

9. Connexion selon l'une quelconque des revendications 1 à 8, **caractérisée en ce qu'**un côté visible (34a, 44a) de la cale (14, 24, 34, 44, 54) est en affleurement avec le côté extérieur (1c) du pare-brise (1).

10. Connexion selon la revendication 9, **caractérisée en ce que** le côté visible (34a, 44a) est en outre en affleurement avec le côté extérieur du déflecteur d'eau (2, 2').

11. Connexion selon l'une quelconque des revendications 1 à 8, **caractérisée en ce que** la cale (14, 24, 34, 44, 54) est réalisée approximativement en forme de champignon en section transversale.

12. Connexion selon l'une quelconque des revendications 1 à 8, **caractérisée en ce que** la cale (24) est réalisée approximativement en forme de croissant et s'applique hermétiquement avec tension par un bord supérieur (24a) contre le côté extérieur (1c) du pare-brise (1).

13. Connexion selon l'une quelconque des revendications 1 à 12, **caractérisée en ce que** la cale (44) présente un canal interne continu (44a).

14. Connexion selon l'une quelconque des revendications 1 à 13, **caractérisée en ce que** le cadre de vitre (5) est fixé sur le côté inférieur du pare-brise (1).

15. Connexion selon la revendication 14, **caractérisée en ce que** le cadre de vitre (5) est collé contre le pare-brise (1).

16. Connexion selon la revendication 14 ou 15, **caractérisée en ce que** le cadre de vitre (5) est collé contre le pare-brise au moyen d'une bande adhésive (6).

17. Connexion selon l'une quelconque des revendications 1 à 16, **caractérisée en ce que** la cale (14, 24, 34, 44, 54) est encliquetée de manière détachable dans le canal (5).

18. Connexion selon l'une quelconque des revendications 1 à 17, **caractérisée en ce que** la cale (34) présente, vu en section transversale, des zones de duretés différentes (34b, 34c).

19. Déflecteur d'eau pour une connexion selon la revendication 1, dans lequel la nervure de retenue (2a) est disposée sur un bord supérieur du déflecteur d'eau et dépasse approximativement à angle droit vers le bas, **caractérisé en ce que** la cale (54) est connectée à la nervure de retenue (2a).

20. Déflecteur d'eau selon la revendication 19, **caractérisé en ce que** la cale (54) est connectée au moyen d'une charnière vive (7) à la nervure de retenue (2a).

21. Déflecteur d'eau selon la revendication 19 ou 20, **caractérisé en ce que** la cale (54) est réalisée sous forme de bande.

22. Déflecteur d'eau selon l'une quelconque des revendications 19 à 21, **caractérisé en ce que** la cale (54) est une bande flexible en matière plastique.

23. Déflecteur d'eau selon l'une quelconque des revendications 19 à 22, **caractérisé en ce que** la cale (54) présente, vu en section transversale, des zones de duretés différentes.

24. Déflecteur d'eau selon la revendication 23, **caractérisé en ce qu'**une zone supérieure de la cale (54) est plus tendre qu'une zone inférieure.

25. Déflecteur d'eau selon l'une quelconque des revendications 20 à 24, **caractérisé en ce que** la cale (54) peut être encliquetée avec la nervure de retenue.

26. Déflecteur d'eau selon l'une quelconque des revendications 19 à 25, **caractérisé en ce que** la cale (44) présente un canal interne continu (44a).

27. Cadre de vitre pour une connexion selon la revendication 1, comprenant une courbure (5a), **caractérisé en ce qu'**il présente des renfoncements dans lesquels on met de la colle (9) pour fixer le cadre de vitre au côté interne du pare-brise (1).
